Europäisches Patentamt

European Patent Office

Office européen des brevets

(19)

(11) Numéro de publication : **0 520 952 A1**

# (12) DEMANDE DE BREVET EUROPEEN

(21) Numéro de dépôt : **92810492.6**

(22) Date de dépôt : **26.06.92**

(51) Int. Cl.⁵ : **G02B 6/30,** G02B 6/42

(30) Priorité : **26.06.91 CH 1882/91**

(43) Date de publication de la demande :
**30.12.92 Bulletin 92/53**

(84) Etats contractants désignés :
**AT BE CH DE DK ES FR GB GR IT LI LU MC NL PT SE**

(71) Demandeur : **CENTRE SUISSE D'ELECTRONIQUE ET DE MICROTECHNIQUE S.A.**
**Maladière 71**
**CH-2007 Neuchâtel (CH)**

(72) Inventeur : **Parriaux, Olivier**
**Cité-Derrière 3**
**CH-1005 Lausanne (CH)**
Inventeur : **Debergh, Patrick**
**Rue des Prélards 13**
**CH-2088 Cressier (CH)**

(74) Mandataire : **Brulliard, Joel**
**c/o Centre Suisse d'Electronique et de Microtechnique S.A. Maladière 71**
**CH-2007 Neuchâtel (CH)**

(54) **Procédé pour coupler une fibre optique à un composant optoélectronique et dispositif de raccordement obtenus.**

(57) L'invention se rapporte à un procédé pour coupler une fibre optique à un composant optoélectronique et à un procédé de fabrication d'une encoche dans un substrat, ainsi qu'aux dispositifs de raccordement ainsi obtenus.

FIG. 3

EP 0 520 952 A1

La présente invention se rapporte aux dispositifs intervenant dans les liaisons optiques en général et plus particulièrement à un procédé pour coupler une fibre optique à un composant optoélectronique et aux dispositifs de raccordement obtenus.

Le brevet US 4,756,591 de K. Fischer et al. décrit un dispositif pour coupler une fibre optique à un composant optoélectronique comportant un guide d'onde optique. L'alignement entre la fibre optique et le composant optoélectronique s'effectue par l'intermédiaire d'un support de fibres. Ledit support de fibres est en silicium et comporte un sillon en forme de "V".

L'alignement du coeur de la fibre optique avec le guide d'onde nécessite des sillons d'une profondeur importante de l'ordre de 100 μm et donc une orientation des axes du monocristal de silicium à 0,1° près pour obtenir une reproductibilité de ladite profondeur avec une précision de quelques dizièmes de micron.

La précision dudit alignement est fonction de l'orientation prise par la fibre optique lors de son montage dans le sillon en "V". L'orientation, pour être efficace, nécessite l'emploi d'un sillon de longueur importante. De plus, le positionnement du support vis-à-vis du composant optoélectronique impose aux surfaces frontales en contact une planéité d'une grande précision.

Les méthodes d'attaque connues pour la réalisation desdits sillons en "V" autorisent une précision de l'ordre de quelques dizièmes de micron.

Le document "Réalisation de composants passifs optiques intégrés en verre moulable," de C. Nissim et al., Opto 85, p. 114-115, montre un dispositif permettant la mise en place de fibres optiques face à des guides d'ondes optiques intégrés.

La solution décrite consiste à réaliser des encoches en "V" par moulage de précision dans une plaque de verre. Les guides d'ondes enterrés sont ensuite réalisés dans ledit verre moulable en référence à la position prise par la fibre dans son encoche.

L'inconvénient d'une telle solution réside dans la méthode d'alignement devant être employée. La position à considérer étant fixée par la fibre optique dans son encoche, l'alignement ne peut être réalisé que par la mise à la bonne profondeur du guide lors d'un deuxième échange ionique dont le contrôle n'est pas simple.

Un autre inconvénient est que la position prise par chacune des fibres est différente selon la fibre considérée. Ces positions nécessitent des encoches de grandes profondeurs obtenues par moulage, mais dont la précision n'est pas suffisante pour permettre l'alignement de fibres optiques monomodes. La solution proposée ne peut donc être applicable qu'aux fibres optiques multimodes.

Aussi un objet de la présente invention est un procédé permettant l'alignement d'une fibre optique et d'un guide d'onde optique intégré dans un substrat et ne présentant pas les inconvénients mentionnés ci-dessus.

Un autre objet est un procédé pour coupler une fibre optique à un composant optoélectronique comportant un guide d'onde optique intégré pouvant être utilisable en optique guidée monomode.

Un autre objet est un procédé avantageux pour coupler une fibre optique à un composant optoélectronique comportant au moins un guide d'onde optique intégré.

Un autre objet est un dispositif de raccordement de fibres optiques à un composant optoélectronique comportant au moins un guide d'onde optique intégré.

Un autre objet est un dispositif de raccordement de fibres optiques.

Les caractéristiques de l'invention sont définies dans les revendications.

Un avantage du procédé de couplage et des dispositifs de raccordement de l'invention est que l'alignement du coeur de la fibre optique avec le guide d'onde n'est tributaire de façon critique ni de l'orientation prise par la fibre dans le sillon de son support, ni du positionnement du support de fibres vis-à-vis du composant optoélectronique.

Une première conséquence est l'emploi pour les fibres d'un support dont le positionnement vis-à-vis du composant optoélectronique s'effectue avec une précision moins grande que les précisions requises dans les éléments similaires de l'art antérieur.

Une deuxième conséquence est que les sillons en "V" du support de fibres peuvent être réalisés avec une précision de quelques microns seulement.

Ces deux avantages découlent du fait que le support de fibres et ses sillons n'interviennent pas directement au niveau de la précision de l'alignement entre la fibre et le guide d'onde.

Un autre avantage de l'invention est que, bien que réalisée par des techniques d'attaque planaire usuelles ou encore par une technique de croissance d'une couche métallique, l'encoche se compose de deux flancs obtenus avec une extrême précision.

Cet avantage primordial est dû au fait que la définition photolithographique de l'encoche et le transfert de cette encoche dans un substrat d'optique intégrée sont effectués de manière frontale. En d'autres termes, l'attaque planaire ou la croissance d'une couche métallique s'effectue selon la direction de propagation de l'onde optique laquelle est parallèle aux deux flancs constituant le "V" de l'encoche.

Un autre avantage du procédé de fabrication de la stucture de l'invention est que la profondeur d'attaque ou l'épaisseur de croissance métallique se limite à la longueur de l'encoche, laquelle peut être inférieure à sa profondeur. Le temps d'attaque est alors restreint d'où un contrôle plus facile et une précision accrue.

D'autres objets, caractéristiques et avantages de la présente invention apparaîtront plus clairement à la lecture de la description suivante, description faite à titre purement illustratif et en relation avec les dessins joints dans lesquels:

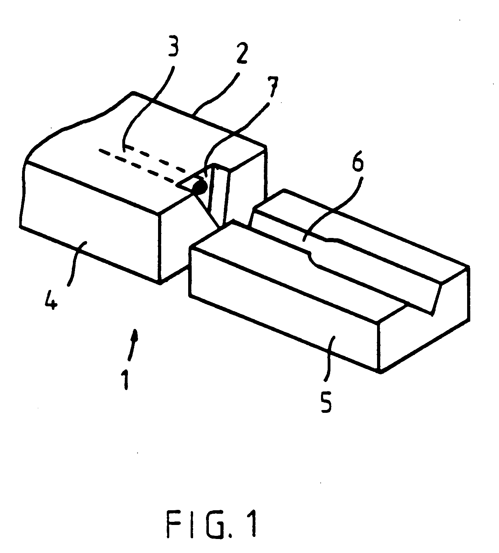

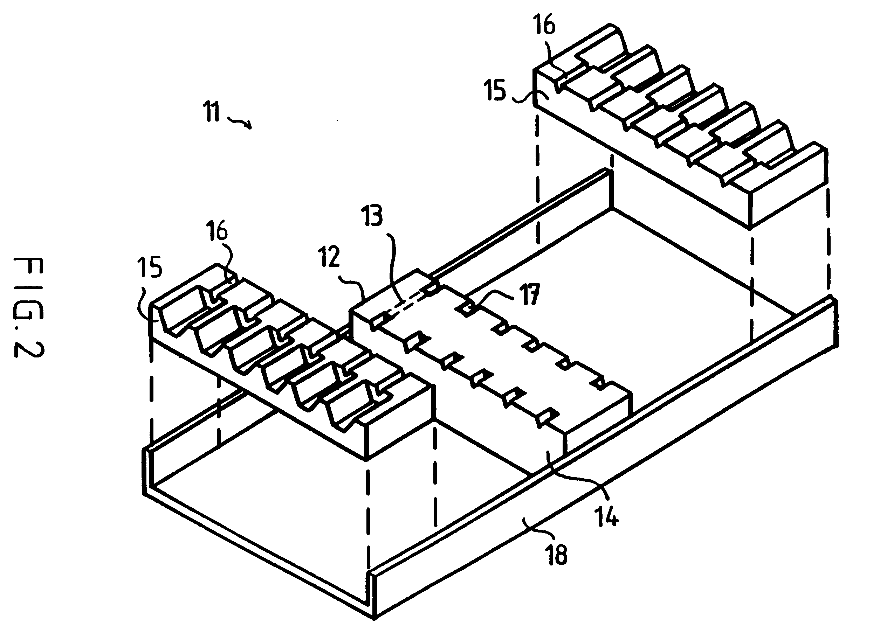

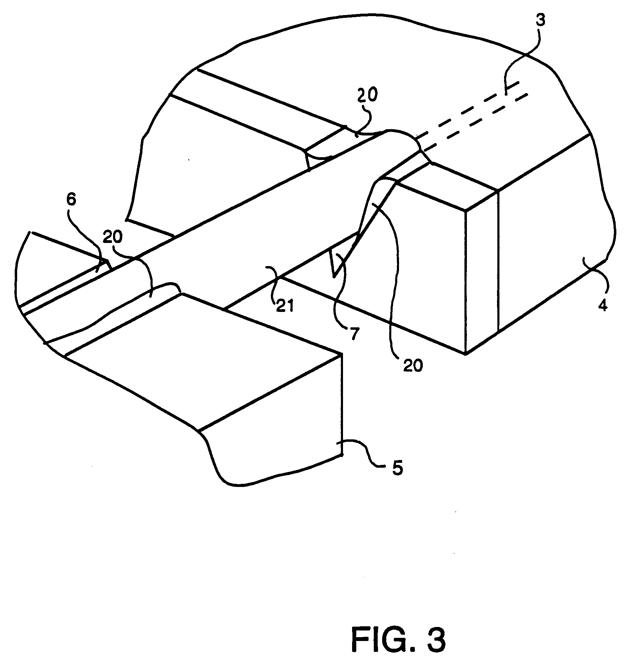

Les figures 1 et 2 montrent deux dispositifs de raccordement conformes à l'invention; la figure 3 montrant une vue détaillée partielle du dispositif de la figure 1.

La présente invention concerne un procédé pour coupler une fibre optique à un composant optoélectronique 2, comportant un guide d'onde optique 3 intégré dans un substrat 4, dans lequel:

- l'embout d'une fibre optique est prépositionné, dans un sillon 6 réalisé dans un support de fibres 5, de manière telle que la fibre optique dépasse dudit support;
- ledit embout prépositionné dans ledit sillon est maintenu par des premiers moyens;
- l'extrémité de la fibre optique est positionnée de façon prédéterminée dans une encoche 7 réalisée sur un bord du substrat dans le prolongement du sillon et dans laquelle débouche le guide d'onde dudit composant optoélectronique, de manière que ladite extrémité soit alignée avec ledit guide d'onde pour permettre une transmission maximale de l'énergie lumineuse; et
- ledit support de fibres est maintenu en bout du composant optoélectronique par des seconds moyens, les faces frontales dudit composant optoélectronique et dudit support de fibres se faisant face n'étant pas en contact direct, de manière que l'alignement du coeur de la fibre optique avec le guide d'onde ne soit tributaire ni de l'orientation prise par la fibre dans le sillon de son support, ni du positionnement du support de fibres vis-à-vis du composant optoélectronique.

Une réalisation préférée d'un dispositif de raccordement selon l'invention est représentée à la figure 1; une vue plus détaillée étant montrée à la figure 3.

Le dispositif de raccordement 1 comprend un support de fibres 5 positionné dans le prolongement du composant optoélectronique 2. Ledit composant optoélectronique est maintenu en bout dudit support de fibres par des premiers moyens de maintien tels que la plaque de base 18 de la figure 2. Selon ce mode de réalisation préférentiel, les faces du support de fibres et du composant optoélectronique se faisant face ne sont pas en contact direct. En d'autres termes, le positionnement du support de fibres dans le prolongement du composant optoélectronique ne nécessite pas une planéité importante de la face frontale du support de fibres.

Ledit support de fibres comporte un sillon 6 en forme de "V" dans lequel vient se prépositionner l'embout de la fibre optique pouvant être dénudée partiellement. La largeur du sillon est adaptée aux dimensions de la fibre dénudée et/ou de la gaine extérieure de la fibre. Ladite fibre optique est maintenue dans le sillon par des seconds moyens tel de la colle 20 comme montré à la figure 3.

Le composant optoélectronique est constitué d'un substrat 4 dans lequel est intégré au moins un guide d'onde optique 3 devant être couplé à une fibre optique (voir figure 3). Ledit substrat comporte une encoche 7 en forme de "V" ou en forme de "V" tronqué dans laquelle débouche ledit guide d'onde du composant optoélectronique. La fibre optique est maintenue dans le sillon du support de fibres et dépasse le bord de ce support. Celui-ci est positionné dans le prolongement du composant optoélectronique de manière que l'embout de ladite fibre optique vienne se loger dans l'encoche en forme de "V". Les flancs de ladite encoche en forme de "V" imposent à l'extrémité de la fibre optique une position prédéterminée de manière qu'elle soit alignée avec ledit guide d'onde pour permettre une transmission optimum de l'énergie lumineuse. Puis la fibre est fixée dans l'encoche à l'aide d'une colle 20 (figure 3).

Dans un tel agencement le positionnement du support de fibres vis-à-vis du composant optoélectronique peut s'effectuer avec une précision inférieure aux précisions requises dans les dispositifs de l'art antérieur. De plus, le sillon en "V" est réalisé avec une précision standard du fait qu'il n'est destiné qu'à prépositionner la fibre optique.

Il résulte de ce qui précède que les sillons en "V" du support de fibres sont obtenus par des techniques connues, par exemple, par meulage dans un support en métal ou en céramique, ou encore par moulage d'un plastique ou d'un verre.

Un premier procédé de fabrication de l'encoche dans un substrat tel que verre, $LiNbO_3$ ou autre comporte principalement les étapes suivantes:

- polissage du bord du substrat situé à l'extrémité du guide d'onde;
- dépôt sur ledit bord d'un film de résine photosensible;
- transfert photolithographique sur ledit bord d'un motif en "V" réalisé sur un masque et centré sur ledit guide d'onde; et
- attaque à sec frontale de faible épaisseur, environ 20 à 30 μm.

Conformément à l'invention, le masque d'attaque chimique est réalisé sur la surface frontale du substrat de manière que l'encoche ainsi réalisée au bord du substrat permette que la fibre optique venant se loger dans ladite encoche soit alignée avec le guidé d'onde du composant optoélectronique lequel débouche dans ladite encoche. L'attaque chimique pour former l'encoche est effectuée sur une faible épaisseur, typiquement 20 à 30 μm.

Un autre procédé de fabrication (cf. I. Milosevic et al. "Polyimide Enables High Lead Count TAB ", Semiconductor International, October 1988, Cahners Publishing Company) de l'encoche comporte principalement les étapes suivantes:

- dépôt sur une face du substrat d'un film de résine photosensible négative d'environ 20 μm d'épaisseur;
- illumination du film de résine photosensible par projection à travers un dessin en forme de "V" et à l'aide d'un "stepper"; - développement de la résine;
- dissolution de la résine située en dehors de l'emplacement de l'encoche;
- évaporation d'un filin métallique sur ladite face;
- croissance galvanique d'une couche métallique sur ledit film métallique; et
- dissolution de la résine restante.

Conformément à l'invention, ces étapes s'effectuent sur la face frontale du substrat du composant optoélectronique faisant face au support de fibres optiques.

La croissance galvanique s'effectue sur ladite face frontale de manière que l'encoche ainsi réalisée au bord du substrat assure l'alignement de l'extrémité de la fibre optique venant se loger dans ladite encoche avec le guide d'onde du composant optoélectronique qui débouche dans ladite encoche. La croissance de la couche métallique pour former une encoche est réalisée sur une faible épaisseur, typiquement 20 à 30 μm.

Bien que la présente invention ait été décrite dans le cadre d'un exemple de réalisation particulier, il est clair, cependant qu'elle est susceptible de modifications et/ou de variantes sans sortir de son domaine.

Une variante du dispositif de raccordement conforme à l'invention permet de coupler plusieurs fibres optiques à un composant optoélectronique.

Dans cette variante, le support de fibres comporte plusieurs sillons en forme de "V" dans lesquels viennent se prépositionner les embouts desdites fibres optiques. Le composant optoélectronique est constitué d'un substrat sur lequel sont intégrés plusieurs guides d'ondes optiques devant être couplés auxdites fibres optiques. Ledit substrat comporte alors , dans le prolongement desdits sillons, plusieurs encoches dans lesquelles débouchent lesdits guides d'ondes dudit composant optoélectronique.

Conformément à l'invention, un dispositif de raccordement de fibres optiques à un composant optoélectronique comportant au moins un guide d'onde optique comporte:
- un composant optoélectronique au bord duquel est réalisée au moins une encoche dans laquelle débouche un guide d'onde dudit composant optoélectronique;
- un support de fibres optiques muni de sillons dans lesquels viennent se prépositionner les embouts des fibres optiques;
- des premiers moyens pour maintenir les embouts prépositionnés dans les sillons; et
- des seconds moyens pour maintenir ledit support de fibres en bout dudit composant optoélectronique de manière que l'extrémité d'au moins une fibre optique vienne se loger dans ladite encoche de façon telle que ladite fibre soit alignée avec ledit guide d'onde pour permettre une transmission maximale de l'énergie lumineuse.

Conformément à l'invention et tel que représenté à la figure 2, un dispositif de raccordement 11 de fibres optiques (non représentées) comporte:
- un composant optoélectronique 12 comportant au moins un guide d'onde 13, intégré dans un substrat 14, dont chaque extrémité débouche sur une encoche 17 réalisée de part et d'autre dudit composant;
- deux supports 15 de fibres optiques munis de sillons 16 dans lesquels viennent se prépositionner l'embout desdites fibres optiques et disposés de part et d'autre dudit composant optoélectronique;
- des premiers moyens (non représentés) pour maintenir les embouts prépositionnés dans les sillons; et
- des seconds moyens 18 pour maintenir lesdits supports de fibres en bout dudit composant optoélectronique de manière que l'extrémité de la fibre optique vienne se loger dans ladite encoche de façon telle que ladite fibre soit alignée avec ledit guide d'onde pour permette une transmission maximale de l'énergie lumineuse.

Dans de tels dispositifs, l'alignement du coeur de la fibre avec le guide d'onde n'est tributaire ni de l'orientation prise par ladite fibre dans le sillon de son support, ni du positionnement du support de fibres vis-à-vis du composant optoélectronique.

En conclusion, les fibres optiques sont prépositionnées sur les supports de fibres par des premiers moyens, par exemple par collage desdites fibres dans leurs sillons respectifs. Les supports de fibres sont positionnés face au composant optoélectronique par des seconds moyens, par exemple une plaque de base. Enfin, les extrémités des fibres optiques, préalablement logées dans leurs encoches respectives, sont maintenues dans celles-ci par des moyens, non représentés, par exemple solidaires d'une plaque de recouvrement, laquelle peut, par exemple, s'encliqueter sur la plaque de base.

**Revendications**

1. Procédé pour coupler une fibre optique à un composant optoélectronique (2), comportant un guide d'onde optique (3) intégré dans un substrat (4), dans lequel:
   - l'embout de la fibre optique est prépositionné dans un sillon (6) disposé dans un support de fibres (5);
   - ledit embout prépositionné dans ledit sillon est maintenu par des premiers moyens; caractérisé en ce que ledit support de fibres est maintenu en bout dudit composant optoélectronique par des seconds moyens, les faces frontales dudit composant optoélectronique et dudit support de fibres se faisant face n'étant pas en contact direct, afin que l'alignement du coeur de la fibre optique avec le guide d'onde ne soit tributaire ni de l'orientation prise par la fibre dans le sillon de son support, ni du positionnement du support de fibres vis-à-vis du composant optoélectronique, et

en ce que l'extrémité de la fibre optique se positionne de façon prédéterminée dans une encoche (7) réalisée sur un bord dudit substrat dans le prolongement dudit sillon et dans laquelle débouche ledit guide d'onde dudit composant optoélectroriique, de manière que ladite extrémité soit alignée avec ledit guide d'onde pour permettre une transmission maximale de l'énergie lumineuse.

2. Dispositif de raccordement (1) de fibres optiques à un composant optoélectronique (2) comportant au moins un guide d'onde optique (3) intégré dans un substrat (4), caractérisé en ce qu'il comporte:

- un composant optoélectronique au bord duquel est réalisée au moins une encoche (7) dans laquelle débouche un guide d'onde dudit composant optoélectronique;
- un support de fibres optiques (5) muni de sillons dans lesquels viennent se prépositionner les embouts desdites fibres optiques;
- des premiers moyens pour maintenir lesdits embouts prépositionnés dans lesdits sillons; et
- des seconds moyens pour maintenir ledit support de fibres en bout dudit composant optoélectronique de manière que l'extrémité d'au moins une fibre optique vienne se loger dans ladite encoche de façon telle que ladite face soit alignée avec ledit guide d'onde pour permettre une transmission maximale de l'énergie lumineuse.

3. Dispositif de raccordement de fibres optiques, caractérisé en ce qu'il comporte:

- un composant optoélectronique (12) comportant au moins un guide d'onde (13), intégré sur un substrat (14), dont chaque extrémité débouche sur une encoche (17) disposée de part et d'autre dudit composant;
- deux supports (15) de fibres optiques munis de sillons (16) dans lesquels viennent se prépositionner l'embout desdites fibres optiques et disposés de part et d'autre dudit composant optoélectronique;
- des premiers moyens pour maintenir les embouts prépositionnés dans les sillons; et
- des seconds moyens (18) pour maintenir lesdits supports de fibres en bout dudit composant optoélectronique de manière que l'extrémité de la fibre optique vienne se loger dans ladite encoche de façon telle que ladite fibre soit alignée avec ledit guide d'onde pour permettre une transmission maximale de l'énergie lumineuse.

FIG. 1

FIG.2

# FIG. 3

Office européen
des brevets

**RAPPORT DE RECHERCHE EUROPEENNE**

Numero de la demande

EP   92 81 0492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | PATENT ABSTRACTS OF JAPAN vol. 9, no. 56 (E-302)(1779) 12 Mars 1985 & JP-A-59 197 184 ( NIPPON  DENKI ) 8 Novembre 1984 * abrégé * | 1,2,3 | G02B6/30 G02B6/42 |
| Y | EP-A-0 126 003 (ETAT  FRANCAIS) * revendications; figures * | 1,2,3 | |
| A | EP-A-0 146 196 (PHILIPS) * page 5, ligne 10 - ligne 35; figures 1,3 * * page 6, ligne 1 - ligne 11 * | 1,2,3 | |
| A | EP-A-0 277 390 (PHILIPS) * le document en entier * | 1,2,3 | |
| A | PATENT ABSTRACTS OF JAPAN vol. 12, no. 334 (P-756)(3181) 8 Septembre 1988 & JP-A-63 096 609 ( NEC CORP. ) 27 Avril 1988 * abrégé * | 1,2 | |

**DOMAINES TECHNIQUES RECHERCHES (Int. Cl.5 )**

G02B

Le présent rapport a été établi pour toutes les revendications

| Lieu de la recherche | Date d'achèvement de la recherche | Examinateur |
|---|---|---|
| LA HAYE | 06 OCTOBRE 1992 | MATHYSSEK K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)